# EUROPÄISCHE PATENTANMELDUNG

(11) **EP 0 968 872 A2**
(43) Veröffentlichungstag der Anmeldung: **05.01.2000**
(21) Anmeldenummer: 99112479.3
(22) Anmeldetag: 01.07.1999
(51) Int. Cl.: B60L 3/10

(54) **Traktionsantrieb mit Asynchronmotoren**

(30) Priorität: 03.07.1998 DE 19829778
(71) Anmelder: ABB Daimler-Benz Transportation (Technology) GmbH, 13627 Berlin (DE)
(72) Erfinder: Canavan, Klaus P., 51503 Rösrath (DE); Meyer, Markus, Dr., 6030 Ebikon (CH); Menth, Stefan, Dr., 5415 Nussbaumen (CH)
(74) Vertreter: Kaiser, Helmut, Dr.

(57) **Zusammenfassung**

Ein Traktionsantrieb mit mehreren Antriebsgruppen ist mit einem Hauptregelkreis (2) ausgestattet, der aufgrund der momentanen Zugkraft und deren Sollwert (Fx_soll) die Leerlauffrequenz (fL) aller Antriebsgruppen (1a - 1n) vorgibt. Die Antriebsgruppen sind so ausgelegt, dass die Motoren eine mit zunehmender Achsfrequenz abnehmende Achsfrequenz-Drehmoment-Charakteristik aufweisen. Diese Ausgestaltung verhindert ein Schleudern einzelner Räder und führt zu einer adhäsionsgerechten Lastaufteilung zwischen den Antriebsgruppen.

## Beschreibung

### Technisches Gebiet

Die Erfindung bezieht sich auf einen Traktionsantrieb gemäss Oberbegriff von Anspruch 1.

### Stand der Technik

In bekannten Umrichterfahrzeugen umfasst die Antriebssteuerung eine übergeordnete Adhäsionsregelung, welche mehrere Antriebsgruppen steuert. Die Adhäsionsregelung gibt das Drehmoment der Antriebsgruppen vor. Dies soll derart geschehen, dass das Reibungsangebot optimal ausgenutzt wird. Eine derartige Regelung muss hochdynamisch ausgelegt sein und benötigt ausserdem präzise Drehgeber zur Bestimmung der Antriebsdrehzahl. Die hohe Dynamik führt jedoch zu Stabilitätsproblemen und eine Bestimmung der Antriebsdrehzahl ist insbesondere beim Anfahren schwierig. Ausserdem ist die Gesamtzugkraft stark von stochastischen Variationen des Kraftschlusses der einzelnen Achsen betroffen. Schliesslich können Konditionierungseffekte nicht ohne erheblichen Aufwand ausgenutzt werden.

### Darstellung der Erfindung

Es stellt sich deshalb die Aufgabe, einen Traktionsantrieb derart auszugestalten, dass diese Nachteile zumindest teilweise behoben werden.

Diese Aufgabe wird vom Antrieb gemäss Anspruch 1 gelöst.

Anspruchsgemäss sind die Antriebsgruppen also so ausgelegt, dass deren Drehmoment mit zunehmender Achsdrehfrequenz abfällt, wobei die Beziehung zwischen Drehmoment und Achsdrehfrequenz von mindestens einem Parameter, z.B. der Leerlaufdrehfrequenz abhängt. Dieser Parameter wird vom übergeordneten Hauptregelkreis vorgegeben.

Mit der abfallenden Drehfrequenz-Drehmoment-Charakteristik wird ein Schleudern der einzelnen Achsen verhindert. Gleichzeitig wird, wie unten erläutert, eine adhäsionsgerechte Lastverteilung erreicht und Konditionierungseffekte werden in effizienter Weise ausgenützt.

Der Hauptregelkreis kann langsam ausgestaltet sein. Schnelle Regler werden nur im Bereich der einzelnen Antriebsgruppen benötigt. Durch diese Struktur mit einem langsamen, übergeordneten und schnellen, lokalen Reglern wird die Stabilität des Gesamtsystems erhöht und der leittechnische Aufwand reduziert.

Die Regelgrösse des Hauptregelkreises ist vorzugsweise der Istwert der totalen Zugkraft, die von den Antriebsgruppen erzeugt wird.

Zur Erzeugung der gewünschten Frequenz-Drehmoment-Charakteristik der Antriebsgruppen wird vorzugsweise jede Motorgruppe mit einem Motorregelkreis ausgestattet, der die Ständerfrequenz steuert. Der Motorregelkreis kann zum Beispiel das momentan erzeugte Drehmoment überwachen und die Ständerfrequenz gegenüber der vorgegebenen Leerlauffrequenz reduzieren, so dass eine Charakteristik der gewünschten Steilheit entsteht.

Der erfindungsgemässe Antrieb eignet sich für Traktionsfahrzeuge mit Asynchronmotoren aller Art, insbesondere für Triebfahrzeuge im Schienenverkehr.

### Kurze Beschreibung der Zeichnungen

Weitere bevorzugte Ausführungsmerkmale und Vorteile der Erfindung ergeben sich aus den abhängigen Ansprüchen und der nun folgenden Beschreibung anhand der Figuren. Dabei zeigen:
Fig. 1 die Regelstruktur einer bevorzugten Ausführung der Erfindung,
Fig. 2 eine Illustration der Drehmoment- und Reibungsverhältnisse, die mit der Ausführung nach Fig. 1 erreicht werden,
Fig. 3 ein schematisches Blockdiagramm einer möglichen Ausführung des Motorreglers einer Antriebsgruppe, und
Fig. 4 eine Illustration der Funktionsweise der Kennlinienregelung.

### Weg zur Ausführung der Erfindung

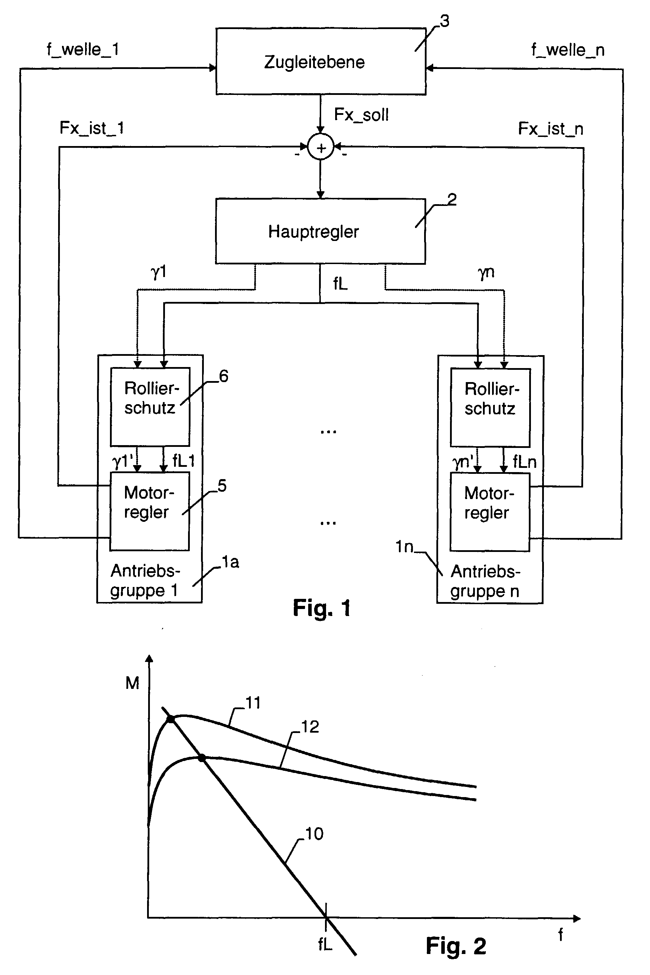

Der Grundaufbau einer bevorzugten Ausführung der Erfindung ergibt sich aus der Regelstruktur gemäss Fig. 1. Im vorliegenden Beispiel dient sie zur Regelung des Antriebs eines Triebfahrzeugs im Eisenbahnverkehr. Das Triebfahrzeug besitzt mehrere Antriebsgruppen 1a - 1n, von denen jede einen Wechselrichter und mindestens einen Asynchronmotor aufweist, sowie geeignete Regelschaltkreise, deren Aufbau weiter unten beschrieben wird.

Gesteuert werden die Antriebsgruppen 1a - 1n gemeinsam von einem langsamen Hauptregler 2. Dem Hauptregler 2 wird von der Zugleitebene 3 der Sollwert Fx_soll der totalen zu erzeugenden Zugkraft zugeführt. Von diesem Sollwert werden die momentan erzeugten Zugkräfte Fx_ist_1 - Fx_ist_n der Antriebsgruppen 1a - 1n subtrahiert und die entsprechende Abweichung wird vom Hauptregler 2 zur Erzeugung der Stellgrössen verwendet. Dabei handelt es sich um eine Leerlauffrequenz fL, zusätzlich (optional) um Steilheitswerte γ1 - γn, die den Antriebsgruppen 1a - 1n zugeführt werden. Die Bedeutung dieser Grössen wird weiter unten erörtert.

In der Ausführung nach Fig. 1 ist ausserdem eine Detektion von Allachs-Schleudervorgängen vorgesehen. Hierzu erhält die Zugleitebene 3 von den Antriebsgruppen 1a - 1n die jeweiligen Achsdrehzahlen f_welle_1 - f_welle_n, die in bekannter Weise ausgewertet werden, um ein Durchdrehen der Räder zu detektieren.

Fig. 2 zeigt in Kurve 10 eine Achsfrequenz-Drehmoment-Charakteristik einer Antriebsgruppe. Wie daraus ersichtlich, sind die Antriebsgruppen so ausgelegt, dass das Drehmoment M mit zunehmender Achsfrequenz f im wesentlichen linear abnimmt. Die Steilheit und Position dieser Kurve kann vom Hauptregler 2 über zwei Grössen festgelegt werden: Die Leerlauffrequenz fL entspricht jenem Wert, bei welchem die Antriebsgruppe kein Drehmoment M erzeugt, die Steilheit γ der ersten Ableitung der Kurve 10.

In Fig. 2 sind ausserdem zwei Kurven 11, 12 dargestellt, die die zwischen den Rädern und der Schiene übertragbare Zugkraft (bzw. das entsprechende Drehmoment) bei unterschiedlichen Verhältnissen darstellen, im vorliegenden Fall für ein stillstehendes Fahrzeug. Wie unmittelbar ersichtlich ist, wird dank der Achsfrequenz-Drehmoment-Charakteristik gemäss Kurve 10 für beide Fälle 11, 12 ein Betrieb mit im wesentlichen maximaler Kraftübertragung erreicht, d.h. es ergibt sich dank dem gemeinsamen Leerlauffrequenz-Sollwert fL und der Regelung der Gesamt-Zugkraft eine adhäsionsgerechte Lastaufteilung. Variiert die übertragene Zugkraft, z.B. aufgrund von Änderungen des Schienenzustands, an einer oder mehreren Antriebsgruppen, so passt der Hauptregler 2 die Lastaufteilung automatisch an die neuen Verhältnisse an. Bei stochastischen Schwankungen des Reibungsangebots vermeiden die einzelnen Antriebsaggregate dank der negativen Drehzahl-Drehmoment-Charakteristik ein Schleudern der Räder, und der Hauptregler verteilt die fehlende Zugkraft auf die übrigen Antriebsaggregate.

Da der Leerlauffrequenz-Sollwert fL für alle Antriebsgruppen gleich ist, kommt es zu einer Verkopplung der Antriebsgruppen, die unzulässig hohe Rad-Schiene-Schlupfwerte einzelner Radsätze unterbindet. Ein Schleudern einzelner Radsätze kann nicht auftreten. Dennoch ist die Ausübung kontrollierter Schlupfwerte der vorlaufenden Radsätze durch geeignete Wahl der Steilheit γ möglich.

Konditionierungseffekte der Schienen werden optimal ausgenutzt. In der Regel ist die erzielbare Reibung der vordersten Antriebsachse geringer als jene der weiter hinten liegenden. Wie in Fig. 2 aus den beiden Reibungskurven 11 und 12 ersichtlich, können die verschiedenen Antriebsgruppen die jeweiligen Reibungsverhältnisse optimal ausnutzen. Dadurch wird die Konditionierung weiter verbessert, da die vorderen Antriebsachsen die Schienen effizient reinigen.

Wie in Fig. 1 dargestellt, umfasst jede Antriebsgruppe 1a - 1n einen Motorregler 5 und einen Rollierschutz 6. Aufgabe des Motorreglers 5 ist die Erzeugung einer Kennlinie 10 gemäss Fig. 2, der (an sich konventionelle) Rollierschutz dient zur Unterdrückung des "Rollierens", d.h. von Schwingungen im mechanischen Antrieb. Im folgenden wird der Aufbau des Motorreglers 5 näher beschrieben.

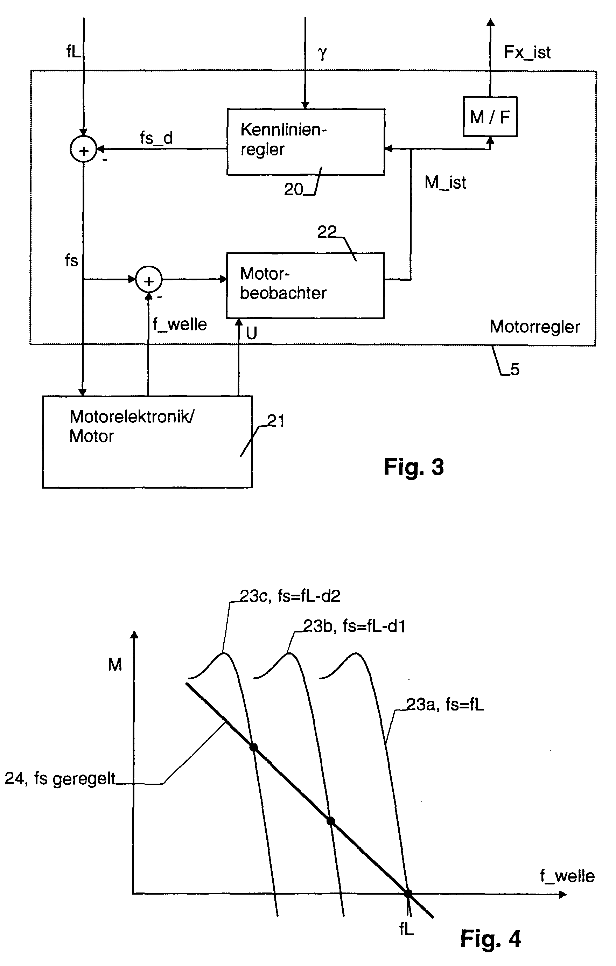

Wie aus Fig. 3 ersichtlich, umfasst der Motorregler 5 einen Kennlinienregler 20, der ein Frequenzkorrektursignal fs_d erzeugt. Dieses wird von der vom Hauptregler 2 vorgegebenen Leerlauffrequenz fL abgezogen, um die Ständerfrequenz fs zu erzeugen. Die Ständerfrequenz fs wird der Motorelektronik 21 der Antriebsgruppe zugeführt und bestimmt die Frequenz, mit welcher das Magnetfeld im Motor umläuft. Ein Motorbeobachter 22 dient dazu, aus der Differenz der Ständerfrequenz fs und der momentanen Wellenfrequenz f_welle, sowie aus der momentan an den Motor angelegten Spannung U und dem gemessenen Motorstrom I das Drehmoment M_ist zu berechnen, das der Motor erzeugt. Das Drehmoment M_ist wird in die entsprechende Zugkraft Fx_ist umgerechnet und an den Hauptregler zurückgeführt. Ausserdem wird das Drehmoment M_ist vom Kennlinienregler 20 verwendet, um das Frequenzkorrektursignal fs_d zu erzeugen.

Die Motorelektronik 21 umfasst den Wechselrichter und einen weiteren, nicht dargestellten Regelkreis. Letzterer dient in bekannter Weise dazu, den Betrag des Feldflusses im Motor konstant zu halten.

Für einen so angesteuerten Motor ergibt sich, bei einer gegebenen Ständerfrequenz fs,eine Achsfrequenz-Drehmoment-Charakteristik, wie sie in den Kurven 23a - 23c von Fig. 4 dargestellt ist. Obwohl diese Kurven bereits die gewünschte Abnahme des Drehmoments von der Drehzahl zeigen, sind sie für die meisten Anwendungen zu steil. Deshalb erzeugt der Kennlinienregler 20 die Korrektur fs_d, welche mit zunehmendem Drehmoment M_ist immer grösser wird. Während die Korrektur fs_d im Leerlauf (Drehmoment 0) den Wert 0 hat, erhöht sie sich mit ansteigenden Drehmoment M, d.h. die Arbeitskurve des Motors wird, wie in Fig. 4 dargestellt, zunehmend nach links verschoben. Somit resultiert eine Achsfrequenz-Drehmoment-Charakteristik 24, welche mit abnehmender Drehzahl im wesentlichen linear zunimmt.

### Bezugszeichenliste

- 1a - 1n:: Antriebsgruppen
- 2:: Hauptregler
- 3:: Zugleitebene
- 5:: Motorregler
- 6:: Rollierschutz
- 10:: Achsfrequenz-Drehmoment-Charakteristik
- 11, 12:: Übertragbare Zugkräfte bei unterschiedlichen Reibungsverhältnissen
- 20:: Kennlinienregler
- 21:: Motorelektronik/Motor
- 22:: Motorbeobachter
- 23a-23c:: Achsfrequenz-Drehmoment-Charakteristik bei konstanten Ständerfrequenzen
- 24:: Achsfrequenz-Drehmoment-Charakteristik bei regulierter Ständerfrequenz
- f_welle, f_welle_1 - f_welle_n:: Achsdrehzahlen der Antriebsgruppen
- fL:: Leerlauffrequenz
- fS:: Ständerfrequenz
- fs_d:: Frequenzkorrektursignal
- Fx_ist_1 - Fx_ist_n:: Momentane Zugkraft einer Antriebsgruppe
- Fx_ist, Fx_soll:: Ist- und Sollwert der Gesamtzugkraft
- M:: Drehmoment
- M_ist:: Istwert des Drehmoments
- M/F:: Drehmoment-Kraft-Wandler
- U:: Motorspannung
- γ, γ1 - γn:: Steilheit der Achsfrequenz-Drehmoment-Charakteristik

## Patentansprüche

1. Traktionsantrieb mit mehreren Antriebsgruppen (1a - 1n) und einem die Antriebsgruppen (1a - 1n) steuernden Hauptregelkreis (2), wobei jede Antriebsgruppe (1a - 1n) einen Wechselrichter (21) und mindestens einen Asynchronmotor aufweist, dadurch gekennzeichnet, dass jede Antriebsgruppe (1a - 1n) derart ausgestaltet ist, dass sie eine von mindestens einem Parameter (fL,γ) abhängige, mit zunehmender Achsfrequenz (f_welle) abfallende Achsfrequenz-Drehmoment-Charakteristik (10) aufweist, und dass der Hauptregelkreis (2) den Antriebsgruppen (1a-1n) den mindestens einen Parameter (fL,γ) vorgibt.

2. Traktionsantrieb nach Anspruch 1, dadurch gekennzeichnet, dass der Hauptregelkreis (2) den Antriebsgruppen eine Leerlauffrequenz (fL) der Achsfrequenz-Drehmoment-Charakteristik vorgibt.

3. Traktionsantrieb nach Anspruch 2, dadurch gekennzeichnet, dass die vorgegebene Leerlauffrequenz (fL) für alle Antriebsgruppen im wesentlichen gleich ist.

4. Traktionsantrieb nach einem der vorangehenden Ansprüche, dadurch gekennzeichnet, dass der Hauptregelkreis den Antriebsgruppen die Steilheit (γ) der Frequenz-Drehmoment-Charakteristik vorgibt.

5. Traktionsantrieb nach einem der vorangehenden Ansprüche, dadurch gekennzeichnet, dass die Regelgrösse des Hauptregelkreises (2) ein totaler, von allen Antriebsgruppen erzeugter Drehmoment- bzw. Zugkraft-Istwert ist.

6. Traktionsantrieb nach einem der vorangehenden Ansprüche, dadurch gekennzeichnet, dass jede Antriebsgruppe einen Kennlinienregelkreis (20) zur Steuerung der Ständerfrequenz (fs) aufweist.

7. Traktionsantrieb nach Anspruch 6, dadurch gekennzeichnet, dass der Kennlinienregelkreis (20) die Ständerfrequenz (fs) abhängig von einem momentan erzeugten Drehmoment (M_ist) regelt.

8. Traktionsantrieb nach einem der Ansprüche 6 oder 7, dadurch gekennzeichnet, dass dem Kennlinienregelkreis (20) als Führungsgrösse eine gewünschte Leerlauffrequenz (fL) zugeführt wird.

9. Traktionsantrieb nach einem der vorangehenden Ansprüche, dadurch gekennzeichnet, dass die Achsfrequenz-Drehmoment-Charakteristik (10) mit zunehmender Achsfrequenz (f_welle) im wesentlichen linear abfällt.

10. Schienenfahrzeug mit einem Traktionsantrieb nach einem der vorangehenden Ansprüche.
